# EUROPEAN PATENT APPLICATION

(11) **EP 1 403 984 A2**
(43) Date of publication of application: **31.03.2004**
(21) Application number: 03090310.8
(22) Date of filing: 23.09.2003
(51) Int. Cl.: H01S 5/00, G01N 21/00, G02B 6/42

(54) **Laser light source device and surface inspection apparatus employing the same**

(30) Priority: 24.09.2002 JP 2002276870; 05.09.2003 JP 2003313809
(71) Applicant: Kabushiki Kaisha TOPCON, Tokyo 174-8580 (JP)
(72) Inventor: Iwa, Yoichiro, Tokyo 174-8580 (JP); Sekine, Akihiko, Tokyo 174-8580 (JP); Miyakawa, Kazuhiro, Tokyo 174-8580 (JP); Isozaki, Hisashi, Tokyo 174-8580 (JP)
(74) Representative: Pfenning, Meinig & Partner

(57) **Abstract**

In a laser light source device (2), a light source unit (11) is constructed by one condenser lens (14) for condensing a laser beam emitted from one semiconductor Laser (12), another condenser lens (15) for condensing a laser beam emitted from another semiconductor laser (13), and a focusing lene (17) for focusing and projecting the laser beam condensed by one condenser lens and the laser beam condensed by another lens onto an incident face (16a) of one light guiding means.

## Description

### Field of the Invention

The present invention relates to a laser light source device which can increase a desired power of the source by using a laser diode having a short-wavelength and a low output power, and a surface inspection apparatus using it.

### Description of the Related Art

Conventionally, a surface inspection apparatus having a light source device, which uses a laser as the light source, has been widely known (Japanese Patent Laid-Open 2001-235429).

A surface inspection apparatus that spot beams are partially overlapped to have no illumination irregularity by using multiple lasers as the light source has also been known (Japanese Patent Laid-Open H07-243988).

Furthermore, a surface inspection apparatus adopted to illuminate a surface of material to be inspected by projecting a light from a light source into an incident face of optical fiber (light guiding) and by emitting the light from another face has been known (Japanese Patent Laid-Open H04-259850).

However, recently, a semiconductor laser diode (laser diode) LD has been used as the light source of the laser light source device taking a low power consumption, a small space, and an easiness of maintenance into a consideration. It is also desired to utilize the semiconductor laser LD having a short-wavelength for improving a resolution of the surface inspection apparatus.

For example, a particle (particle) having the diameter of 55nm can be detected by using the conventional surface inspection apparatus having the wavelength of 515nm and the output power of 75mW.

A particle having the further smaller diameter (for instance, the particle having the diameter of 30nm) is adapted to be inspected under the condition of using the same optical system except the light source.

Generally, in case of the particle (0.03 to 0.1. µ) having a diameter less sufficiently than the wavelength that the strength of a scattered light is in proportion to the sixth power of a particle size, and is in inverse-proportion to the fourth power of a wavelength. Furthermore, it is in proportion to an incident power.

Therefore, if the relationship between a laser wavelength which can be projected and an output power is estimated, the following values are obtained. In a case that the diameter of the particle is 30 nm, the output power required for the wavelength of 488nm is 2296mW (milliwatt); the output power required for the wavelength of 405nm is 1089mW (milliwatt); the output power required for the wavelength of 355nm is 643mW (milliwatt); the out put power required for the wavelength of 325nm is 452mW (milliwatt); the output power required for the wavelength of 266nm is 203mW (milliwatt); and the output power required for the wavelength of 257nm is 177mW (milliwatt).

As shown in the above, if the wavelength of the laser becomes shorter, the required output power becomes smaller.

However, if an extremely short-wavelength of a laser is used, the materials used in an optical system of a surface inspection apparatus have to be changed drastically. Without using those optical materials, the LD having the wavelength of 405nm is useful as for controlling power consumption. However, the output power of this LD is only 30nW.

### SUMARRY OF THE INVENTION

It is, therefore, the present invention has been made in view of the aforementioned problems, and an object of the invention is to provide a light source device which can obtain a desirable large power when a semiconductor laser having a short-wavelength and small output power is used, and a surface inspection apparatus using thereof.

A laser light source device according to the present invention comprises a light source unit. The light source unit is constructed by one condensing optical system for condensing a laser beam emitted from one semiconductor laser, another condensing optical system for condensing a laser beam emitted from another semiconductor laser, and a focusing optical system for focusing and projecting the laser beam condensed by one condensing optical system and the laser beam condensed by another condensing optical system onto an incident face of one light guiding means.

It is also desirable for the laser light source device to comprise a focusing unit. The focusing unit is constructed by one condensing optical system for condensing a laser beam emitted from an emission face of light guiding means of one light source unit from a plurality of light source units, another condensing optical system for condensing a laser beam emitted from an emission face of light guiding means of another light source unit, and a focusing optical system for focusing and projecting the laser beam condensed by one condensing optical system and the laser beam condensed by another light guiding means onto an incident face of one light guiding means.

It is further desirable for the laser light source device that a plurality of focusing units are provided, and a condensing optical system for respectively condensing a laser beam emitted from each emission face of each light guiding means in the a plurality of focusing units and a focusing optical system for focusing and projecting a laser beam, which is focused after being condensed by the each condensing optical system, onto an incident face of one light guiding means are included.

It is desirable that the condensing optical system is a collimating lens system.

One condensing optical system and another optical system are disposed substantially symmetrical positions centralizing on an optical axis of the focusing optical system.

The light guiding means is an optical fiber, and an incident face of the optical fiber is disposed in the focusing optical system.

It is also desirable that the light source unit and the focusing unit are optically connected with inverted cascade.

The laser beams generated by means of the semiconductor lasers which are disposed in the light source unit may have different wavelengths. Moreover, the semiconductor lasers which are disposed in the light source unit are operated individually.

### BRIEF DESCRIPTION OF THE DRAWINGS

FIG.1 is a schematic view showing the optical system of the surface inspection apparatus using the light source device according to the present invention.
FIG.2 is a view showing an inverted cascade optical connection state of the light source device according to the present invention.

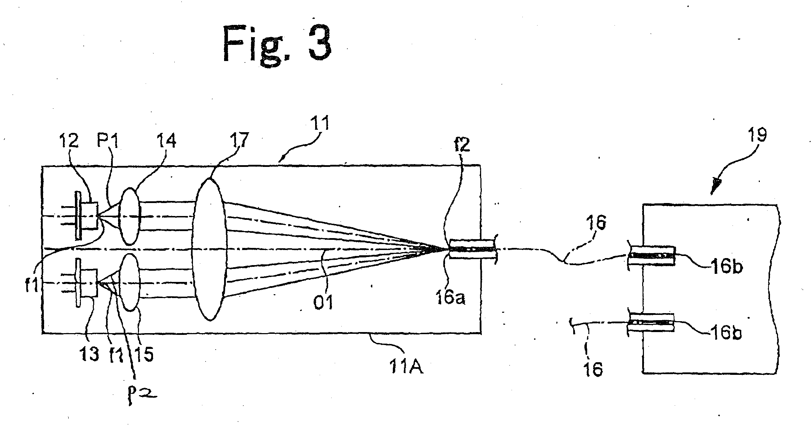

FIG.3 is an enlarged view of the light source unit shown in FIG.2.
FIG.4 is an enlarged view of the focusing unit of the final stage shown in FIG.2.
FIG.5 is an explanation view showing the concrete construction example of the light source unit of the light source device according to the present invention, and it is the view as viewed in the direction arrow Y.
FIG.6 is an explanation view showing the concrete construction example of the light source unit of the light source device according to the present invention, and it is the view as viewed in the direction arrow X.
FIG.7 is a schematic view showing a state that the four light source units respectively including the four semiconductor lasers are adopted as one set, and each set is optically connected to each focusing unit.
FIG.8 is a plan view showing a stat that the four light source units respectively including the two semiconductor lasers are adopted as one set, and it is optically connected to one focusing unit.

### DESCRIPTION OF THE PREFERED EMBODIMENTS

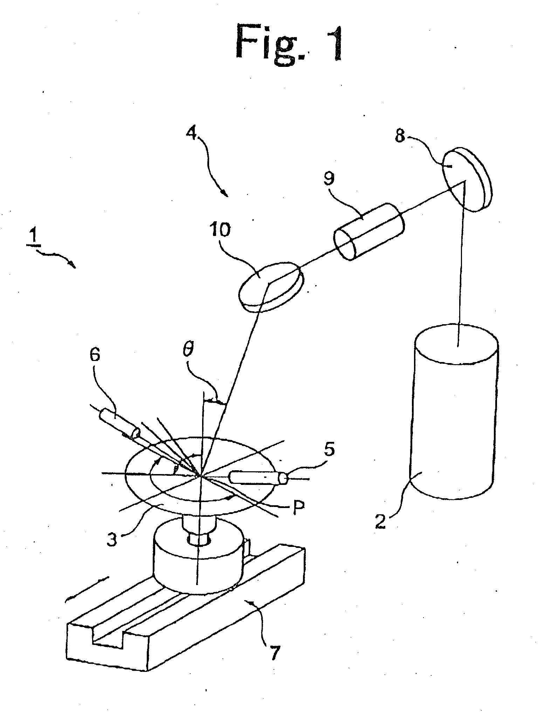

FIG. 1 is a schematic view showing an optical system of a surface inspection apparatus using a laser light source device according to the present invention. In FIG.1, reference numeral 1 denotes a surface inspection apparatus. The surface inspection apparatus 1 comprises a laser light source device 2 and an illumination optical system 4 which illuminates a laser beam emitted from this laser light source device 2 onto a semiconductor wafer 3 as an object to be inspected. The surface inspection apparatus 1 further comprises a first light receiving system 5 for receiving a scattered light of the laser beam, which is illuminated by the illumination optical system 4, from a inspection point P on a surface of the semiconductor wafer 3 and a second light receiving system 6 for receiving a scattered light of the laser beam, which is illuminated by the illumination optical system 4, from the inspection point P on the surface of the semiconductor wafer 3. In the first and second light receiving systems 5 and 6, the scattered lights are received respectively from a first scattered direction and a second scattered direction. The surface inspection apparatus 1 also comprises a displacement device 7 by which the semiconductor wafer 3 is translated and rotated relatively to the laser beam emitted from the illumination optical system 4.

The illumination optical system 4 includes a first mirror 8, a first illumination lens group 9, and a second mirror 10, and is illuminated on the inspection point P through these optical systems at a predetermined illumination angle θ.

If a particle is existed on the inspection point P, the laser beam is scattered in accordance with a predetermined directivity. The first light receiving system 5 receives the scattered light from the inspection point P from the first scattered direction. The second light receiving system 6 receives the scattered light from the inspection point P from the second scattered direction. The light receiving outputs from the first light receiving system 5 and the second light receiving system 6 are loaded into a system of central arithmetic processing (not shown), and the size, the shape, the position, and so on of the particle are measured.

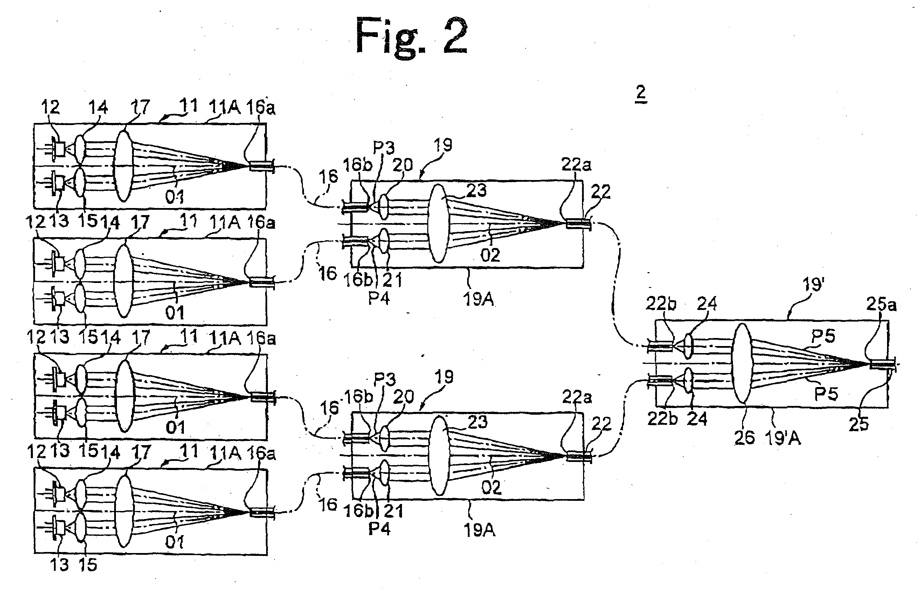

As shown in FIG.2, the laser light source device 2 comprises a plurality of light source units 11. Each of the light receiving units 11 is constructed by one condenser lens 14 for condensing a laser beam P1 omitted from one semiconductor laser 12, another condenser lens 15 for condensing a laser beam P2 emitted from another semiconductor laser 13, and a focusing lens (condenser lens) 17 for projecting the laser beam P1 condensed by one condenser lens 14 and another laser beam P2 condensed by another condenser lens 15 onto an incident face 16a of an optical fiber as one light guiding means. These semiconductor lasers 12 and 13, the condenser lenses 14 and 15, and the focusing lens 17 are set in box 11A.

As the semiconductor lasers 12 and 13, a laser beam having a short wavelength, for example, the laser emitting a purple laser beam (wavelength of 405nm) is used, and the wavelength and the output power are substantially the same.

In this embodiment of the present invention, the condenser lenses 14 and 15 have a role for collimating the laser beams P1 and P2 emitted from the semiconductor lasers 12 and 13. Light emitting points of the semiconductor lasers 12 and 13 are disposed in focal points f1 of the condenser lenses 14 and 15.

The semiconductor laser 12 and the condenser lens 14, and the semiconductor laser 13 and the condenser lens 15 are disposed in substantially point symmetry positions centralizing on an optical axis O1 of the focusing lens 17. In this view, these are disposed in the symmetrical locations across the optical axis O1. The incident face 16a of the optical fiber 16 is disposed in a focal point f2 of the focusing lens 17.

Each optical fiber 16 of each light source unit 16 is guided to a focusing unit 19. In each box 19A of the focusing unit 19, there are provided with one condenser lens 20 for condensing a laser beam P3 emitted from an emission face 16b of one optical fiber 16, another condenser lens 21 for condensing a laser beam P4 emitted from an emission face 16b of another optical fiber 16, a focusing lens 23 for focusing and projecting the laser beam P3 condensed by one condenser lens 20 and the laser beam P4 condensed by another condenser lens 21 onto an incident face 22a of one optical fiber 22.

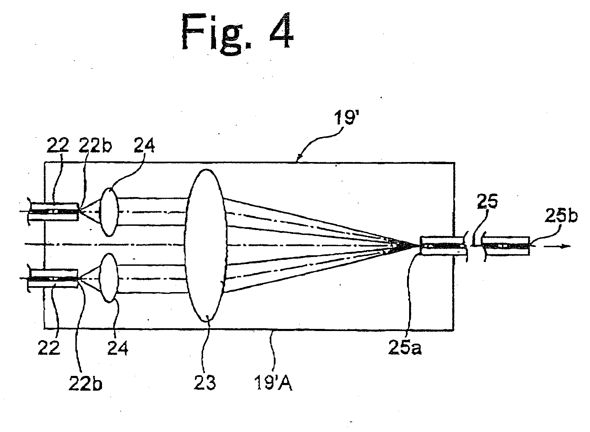

One condenser lens 20 and another condenser lens 21 are disposed in substantially point symmetry locations centralizing on an optical axis O2 of the focusing lens 23. A plurality of focusing units 19 is provided in the laser light source device 2, Each optical fiber 22 of each focusing unit 19 is guided to a focusing unit 19'. The focusing unit 19' is constructed by condenser lenses 24 for respectively condensing a laser beam emitted from each emission face 22b of the optical fiber 22 in the a plurality of focusing units 19, and a focusing lens 26 for focusing and projecting laser beams P5 condensed by each condenser lens 24 onto an incident face 25a of one optical fiber 25. The condenser lenses 24 and the focusing lens 26 are disposed in a box 19'A of the focusing unit 19'. The laser beam projected into the optical fiber 25 is emitted from an emission face 25b of the optical fiber 25 as shown in FIG.4. The laser beam emitted from the emission face 25b is guided to the illumination optical system 4 as an inspection light,

In the illumination optical system 4, the laser beam emitted from the optical fiber 25 is an elliptically polarized light, so that it is better to provide an optical element for converting the elliptically-polarized light into a linearly-polarized light. In other words, a collimating lens (not shown) is disposed in the other end of the emission face 25b of the optical fiber 26. This collimating lens converts the laser beam emitted from the emission face 25b into a parallel luminous flux. A polarizing beam splitter (not shown) is disposed in the other end of the collimating lens. The parallel luminous flux is decomposed to P-polarized light component and S-polarized light component by the polarizing beam splitter. A half-wave plate (not shown) is provided on the way of the parallel luminous flux in one of the polarized light component. By this half-wave plate, a polarised light direction of the polarized light component is rotated 90 degrees. The parallel luminous flux in which the polarized light direction is rotated by 90 degrees and the parallel luminous flux of another polarized light component are synthesized by means a condenser lens, and the synthesized luminous flux is converged and illuminated on the semiconductor wafer 3 as a light of the linearly-polarized light.

In the laser light source device 11, the light source unit 11, the focusing units 19 and 19' are optically connected with reverse cascade, so that the power of the laser beam can be increased.

### (Concrete embodiment)

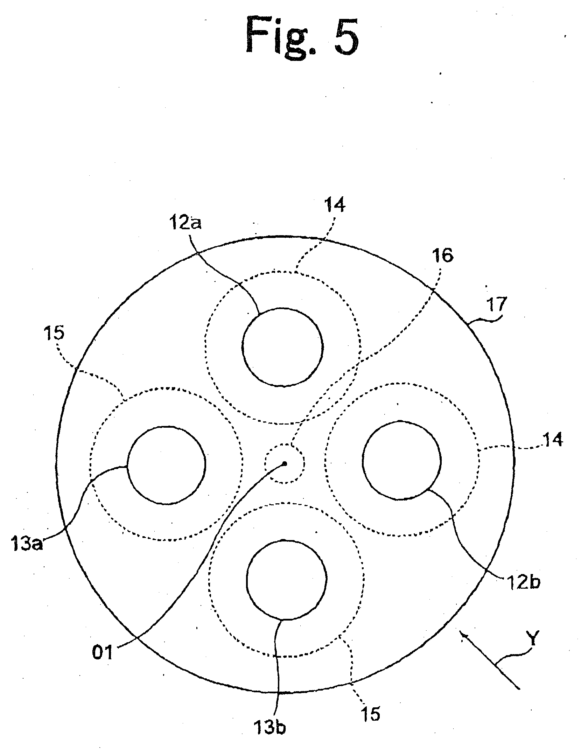

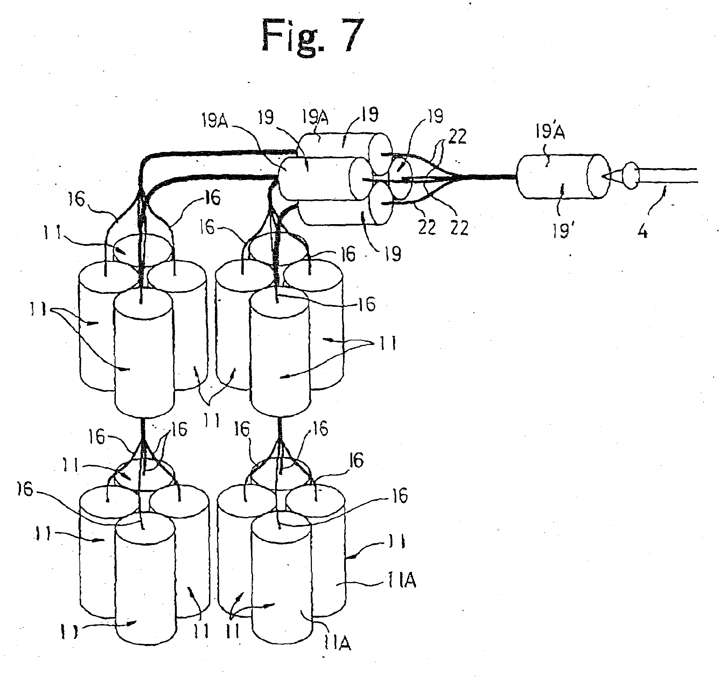

As showing in FIG.5, one light source unit 11 is provided with four semiconductor lasers 12a, 12b, 13a, and 13b. Each of the semiconductor lasers 12a, 12b, 13a, and 13b is disposed in symmetrical locations across an optical axis O1. Each light source unit 11 is optically connected to four conversing units 19, respectively, as shown in FIG.7. The output power of each semiconductor laser 12a, 12b, 13a, and 13b is about 30mW (milliwatt). On the other hand, the output power required for the surface inspection of the semiconductor wafer 3 is about 1W for detecting the particle diameter of 30nm.

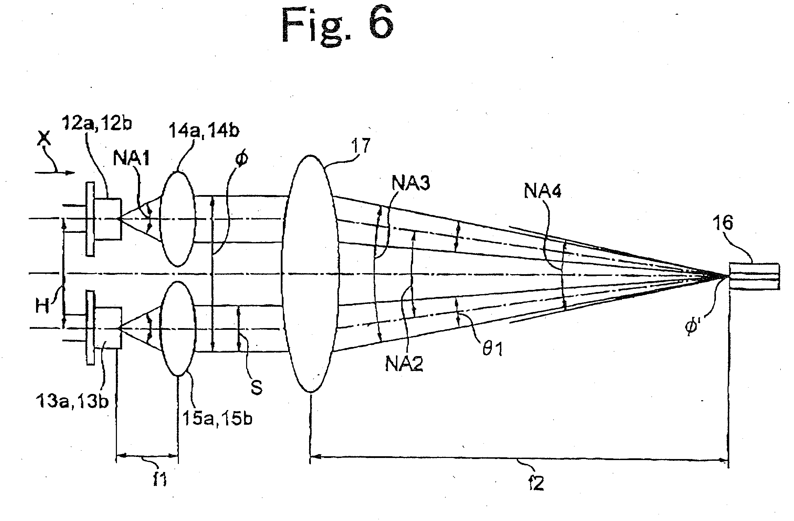

An opening angle NA1 (FIG.6) of the semiconductor lasers 12a, 12b, 13a, and 13b is 0.45. A focal length f1 of the condenser lenses 14a, 14b, 15a, and 15b is 6.5mm. A beam diameter S of the laser beam emitted from each condenser lenses 14a, 14b, 15a, and 15b is 5.85mm. A distance H between key light chief rays is 9.1mm. A luminous flux diameter Φ of the focusing lens 17 is 14.95mm. A focal length f2 of the focusing lens 17 is 41.5mm. A magnification of the focusing lens 17 is 6.39. A converging angle θ 1 of each beam is 0,07. An opening angle NA2 of the key light chief ray is 0.11. An opening angle NA3 of all condensing lights of the focusing lens 17 is 0.18. A condensing beam diameter φ' on the incident face 16a of the optical fiber 16 is 10.98 µ.

Grade Index fiber having the core diameter of 50 µm and the cladding surface diameter of 140 µm is used for each optical fiber 16. A numerical aperture NA4 of the optical fiber 16 is about 0.2. The numerical aperture NA4 should be larger than the opening angle NA3 of all condensing lights.

Transmission factor for this type of optical fiber 16 with respect to the purple wavelength light is about 80%, and the output power of the laser beam emitted from the emission face 16h of the optical fiber 16 in one light source unit 11 is about 96 (30 × 4 × 0.8) mW.

By using four light source units 11, the laser beams emitted from the optical fibers 16 are all together projected onto the incident face 22a of the optical fiber 22 in one focusing unit 19.

The output power of the laser beam emitted from the emission face 22b of the optical fiber 22 in the one focusing unit 19 becomes about 307 mW by construing the above described. Therefore, if the laser beam is projected in the incident face 25a of one optical fiber 25 in the focusing unit 19' by using four focusing units 19, and the laser beam is guided to the illumination optical system 4 by the optical fiber 25, the output power emitted from the emission face 25b of the optical fiber 25 becomes 982mW. Consequently, about 1W of the output power can be obtained.

In the concrete embodiment, four semiconductor lasers which are contained in the light source units 11 are adopted; however, the number of the semiconductor laser which is contained in the light source unit 11 dose not have to be four. The number of the semiconductor laser can be two or three, and the number of the semiconductor laser can be adjusted in accordance with a spatial flexibility of the surface inspection device 1. The number of the light source unit 11 optically connected to the focusing unit 19 does not have to be four.

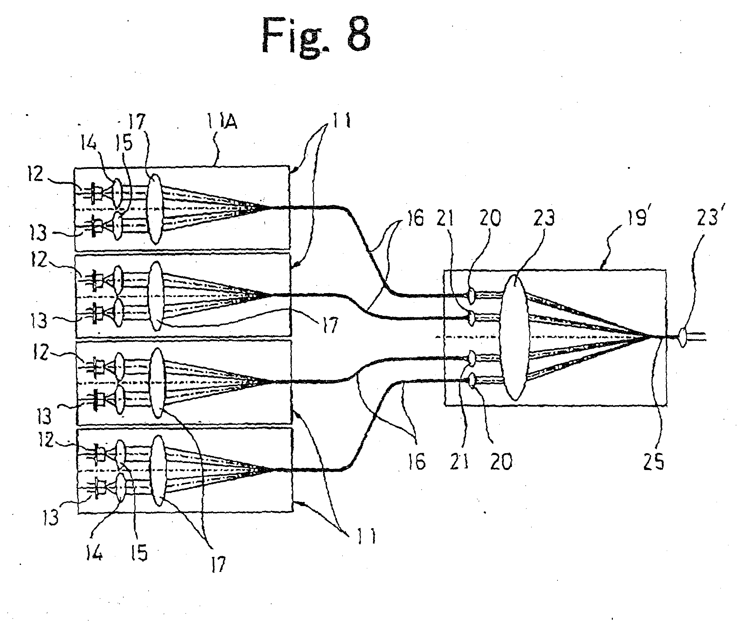

For instance, as shown in FIG.8, a construction that four light source units 11 respectively having two semiconductor lasers 12 and 13 correspond to one converging unit 19 can be adopted. In FIG.8, reference numeral 23' is a collimating lens.

In the embodiment of the present invention, it is explained that each of the light source units 11 has the same wavelength, but it is possible to construct in such a manner that a wavelength of a laser beam emitted from one light source unit and a wavelength of a laser beam emitted from another light source unit are different.

According to the aforementioned construction, an inspection of a particle can be carried out by use of the laser beam having the different wavelength.

When a plurality of light source units are used by optically connecting to focusing units, the semiconductor lasers 12a and 12b and the semiconductor lasers 13a and 13b which are disposed in each light source unit can be set to be different in wavelength of laser beams, respectively.

If these semiconductor lasers 12a, 12b, 13a, and 13b are constructed to be driven and controlled by the well known independent driving control circuit (not shown), the semiconductor lasers 12a and 12b or the semiconductor lasers 13a and 13b can be used as a light source for generating a different short-wavelength laser beam by only driving the semiconductor lasers 12a and 12b or the semiconductor lasers 13a and 13b.

Moreover, if these semiconductor lasers 12a, 12b, 13a, and 13b are driven at the same time, it can be used as a light source for generating a laser beam in which laser beams having different wavelength are synthesized. Moreover, each of the semiconductor lasers 12a, 12b, 13a, and 13b may be controlled all together by a driving circuit which can control multi-channel. These driving control circuits can be selected by setting a wavelength of a laser beam which is determined by an object to be measured or a size of the laser light source device into account.

According to the light source unit 11, when a wavelength is changed or a wavelength is synthesized, it is not necessary to add a special optical system or to change mechanically.

Therefore, the light source unit 11 for generating a plurality of wavelengths having a high reliability can be provided. In a control of the light source unit 11, the well known driving control circuit is used, so that the control is easy.

If each output of the semiconductor lasers (laser diode) 12a, 12b, 13a, and 13b meets a required laser beam strength, and a light source, which can switch and synthesis a wavelength, can be constructed by using only one light source unit 11.

In the embodiment of the present invention, Graded Index Fiber is explained as the optical fiber to be used, but Step Index Fiber of a multi-mode optical fiber can be used, and a single-mode optical fiber can also be used. If the single-mode optical fiber is used, the semiconductor laser and this optical fiber are necessary to be matched one to one. At this point, the core diameter of the optical fiber is explained as 50 µm, but the core diameter may be 62.5 µm or 100 µm, and the core diameter of the optical fiber and the mode are not limited as mentioned above.

In the embodiment of the present invention, the explanation is given by utilizing the condensing lens and the focusing lens. However, the number of the lens construction is not limited for only one lens, for example, it can be constructed by using three lenses. Therefore, in the claims, the words such as a condensing optical system and a focusing lens system are used.

In accordance with the laser light source device according to the present invention, the laser light source device capable of increasing an output power by use of a semiconductor laser having a short-wavelength and small power can be obtained.

Especially, a required power can be adjusted by a number of a light source unit. When the light source unit is malfunctioned, the light source unit can be restored by changing only the malfunctioned light source unit, so that the easy repair and the easy maintenance can be achieved.

Furthermore, according to the present invention, unlike a case bundling optical fibers, the laser light source device of the present invention is not only increasing the output power, a single coaxial laser beam can be obtained. Therefore, the obtained laser beam can be formed and shaped freely.

According to the laser light source device of the present invention, lights having varied wavelengths can be generated by the simple construction.

## Claims

1. A laser light source device, comprising: a light source unit, **characterized in that**:
said light source unit (11) is constructed by one condensing optical system (14) for condensing a laser beam (P₁) emitted from one semiconductor laser (12), another condensing optical system (15) for condensing laser beam (P₂) emitted from another semiconductor laser (13), and a focusing optical system (17) for focusing and projecting the laser beam (P₁) condensed by said one condensing optical system (14) and the laser beam (P₂) condensed by said another condensing optical system (15) onto an incident face (16a) of one light guiding means (16),

2. The laser light source device according to claim 1, **characterized in that** it further comprises a focusing unit (19), and
said focusing unit (19) is constructed by one condensing optical system (14) for condensing a laser beam (P₁) emitted from an emission face (16a) of light guiding means (16) of one light source unit of a plurality of light source units (11), another condensing optical system (15) for condensing a laser beam (P₂) emitted from an emission face (16b) of light guiding means (16) of another light source unit, and a focusing optical system (17) for focusing and projecting the laser beam (P₁) condensed by said one condensing optical system (14) and the laser beam (P₂) condensed by another condensing optical system (15) onto an incident face (16a) of one light guiding means (16).

3. The laser light source device according to claim 2, **characterized in that** a plurality of focusing units (19) are provided, and a condensing optical system (14, 15) for respectively condensing a laser beam (P1, P2) emitted from each emission face (16b) of each light guiding means (16) in the plurality of focusing units (19) and a focusing optical system (17) for focusing and projecting a laser beam, which is focused after being condensed by the each condensing optical system, onto an incident face (16a) of one light guiding means (16) are included.

4. The laser light source device according to any one of claims 1 to 3,**characterized in that** said condensing optical system (14, 15) is a collimating lens system (23').

5. The laser light source device according to any one of claims 1 to 4, **characterized in that** said one condensing optical system (14) and said another condensing optical system (15) are disposed in substantially symmetrical positions centralizing on an optical axis of said focusing optical system (17),

6. The laser light source device according to any one of claims 1 to 5, wherein said light guiding means (16) is an optical fiber, and an incident face (16a) of the optical fiber is disposed in a focal point of said focusing optical system (17).

7. The laser light source device according to claim 3, wherein said light source unit (11) and said focusing unit are optically connected with inverted cascade.

8. The laser light source device according to any one of claims 1 to 7, wherein laser beams generated by semiconductor lasers, which are disposed in said light source unit (11), have different wavelengths.

9. 'The laser light source device according to any one of claims 1 to 8, wherein the semiconductor lasers, which are disposed in said light source unit (11), are controlled individually.

10. A surface inspection apparatus, comprising:
a laser light source device (2),
said laser light source device including a light source unit (11), **characterized in that**:
said light source unit (11) is constructed by one condensing optical system (14) for condensing a laser beam (P₁) emitted from one semiconductor laser (12), another condensing optical system (15) for condensing a laser beam (P₂) emitted from another semiconductor laser (13), and a focusing optical system (17) for focusing and projecting the laser beam (P₁) condensed by said one condensing optical system (14) and the laser beam (P₂) condensed by said another condensing optical system (15) onto an incident face (16a) of one light guiding means (16).
